# EUROPEAN PATENT SPECIFICATION

(11) **EP 3 550 775 B1**
(45) Date of publication and mention of the grant of the patent: **17.01.2024**
(21) Application number: 17876149.0
(22) Date of filing: 18.10.2017
(51) Int. Cl.: H04L 47/78, H04L 47/83, H04L 47/72, H04L 47/70

(54) **RESOURCE DETERMINATION METHOD AND DEVICE**
VERFAHREN UND VORRICHTUNG ZUR RESSOURCENBESTIMMUNG
PROCÉDÉ ET DISPOSITIF DE DÉTERMINATION DE RESSOURCE

(30) Priority: 02.12.2016 CN 201611112074
(43) Date of publication of application: 09.10.2019
(73) Proprietor: ZTE Corporation, Shenzhen, Guangdong 518057 (CN)
(72) Inventor: ZHANG, Maopeng, Shenzhen Guangdong 518057 (CN); WANG, Jianxiong, Shenzhen Guangdong 518057 (CN)
(74) Representative: Aipex B.V.
(86) International application number: PCT/CN2017/106710
(87) International publication number: WO 2018/099200

(56) References cited:
- EP-A1- 1 976 233
- WO-A1-2016/117694
- WO-A1-2016/180143
- CN-A- 104 734 931
- CN-A- 104 954 220
- CN-A- 105 052 097
- CN-A- 106 921 977
- "Network Function Virtualization (NFV) Management and Orchestration;GS NFV-MAN 001", ETSI DRAFT; GS NFV-MAN 001, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. ISG - NFV, no. V0.6.2, 5 August 2014 (2014-08-05), pages 1-195, XP014188540, [retrieved on 2014-08-05]
- ETSI: 'Network Functions Virtualisation (NFV); Management and Orchestration; Network Service Templates Specification' ETSI GS NFV-1 FA 014 V2.1.1 31 October 2016, XP014279838
- HUAWEI: 'Add Terminologies for Network and Resource Management and Orchestration' 3GPP TSG SA WG5 (TELECOM MANAGEMENT) MEETING #110 18 November 2016, pages 5 - 166147, XP051200927

## Description

### TECHNICAL FIELD

The present invention relates to a field of communications and, in particular, to a resource determination method and device.

### BACKGROUND

In a network functions virtualization management and orchestration (NFV MANO) system, a management system is divided into a network functions virtualization orchestrator (NFVO), a virtualized network functions manager (VNFM), a virtualized infrastructure manager (VIM), and a wide area network infrastructure manager (WIM). For a management object level, it is divided into network services (NSs), virtualized network functions (VNFs) and virtual resources (computing, storage, and network). The NSs consist of VNFs and connections between different VNFs. The connection between one VNF and another VNF is a network resource and may be a connection within the VIM or a connection managed by the WIM. The NFVO provides a resource management of NS for a user.

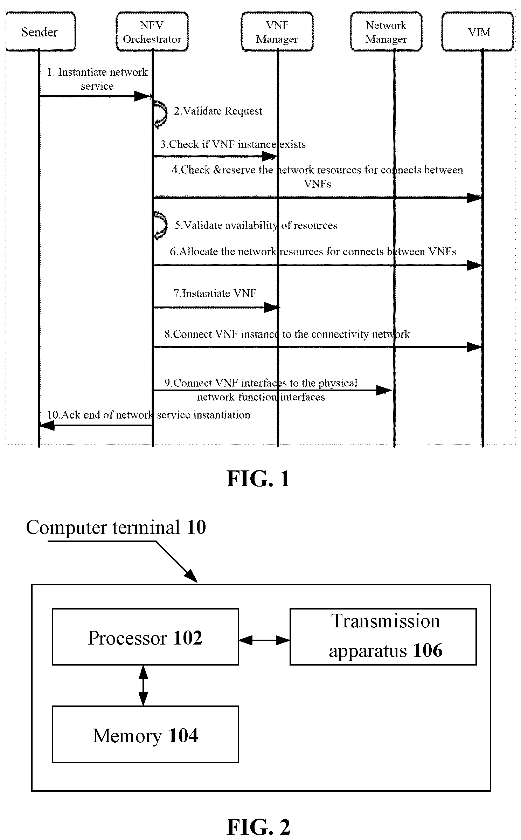

FIG. 1 is a flowchart of a deployment of an NS by the European Telecommunications Standards Institute (ETSI) in the related art. As shown in FIG. 1, the main deployment flow of the NS is as follows.
1. A virtual link (VL) connection between VNFs is created.
2. The VNF is instantiated, a resource grant is performed on the VNF, and a virtual resource required by the VNF is created.

It can be seen from the above flow, a resource requirement of the VNF cannot be acquired before the VNF is instantiated, so a location of the VL connection between the VNFs cannot be accurately selected when creating the VL connection. Otherwise, if the constraint on the VL resource connection of the VNF in the current system is not known, the accuracy of the resource grant on the VNF cannot be guaranteed either.

In the related art, there is no effective solution to solve the problem of having difficulty of ensuring an accuracy for allocating VNF resources and VNF VL resources due to performing a VNF resource grant and allocation process and a VNF VL resource grant and allocation process separately in the related art. Further relevant technologies are also known from WO 2016/117694 A1 (NEC CORP [JP]) 28 July 2016 (2016-07-28) which relates to network functions virtualization management and orchestration method, network functions virtualization management and orchestration system, and program, WO 2016/180143 A1 (ZTE CORP [CN]) 17 November 2016 (2016-11-17) which relates to network functions virtualization system and network service instantiation method and "Network Function Virtualization (NFV) Management and Orchestration; GS NFV-MAN 001", ETSI DRAFT; GS NFV-MAN 001, EUROPEAN TELECOMMUNICATIONS STANDARDS INSTITUTE (ETSI), 650, ROUTE DES LUCIOLES; F-06921 SOPHIA-ANTIPOLIS; FRANCE, vol. ISG-NFV, no. V0.6.2, 5 August 2014 (2014-08-05), pages 1-195, XP014188540

### SUMMARY

The invention is defined in the appended claims.

Embodiments of the present invention provide a resource determination method and device, so as to at least solve the problem of having difficulty of ensuring an accuracy for allocating VNF resources and VNF VL resources due to performing a VNF resource grant and allocation process and a VNF VL resource grant and allocation process separately in the related art.

Through the embodiments of the present invention, resources of a plurality of VNFs and a VNF VL resource required by performing the lifecycle operation of the NS can be determined unifiedly, and corresponding grant information can be obtained unifiedly at least according to the determined resources, thereby solving the problem of having difficulty of ensuring an accuracy for allocating VNF resources and VNF VL resources due to performing a VNF resource grant and allocation process and a VNF VL resource grant and allocation process separately in the related art. The unified determination and grant are performed validly on the VNF resources and VNF VL resources required by performing the NS lifecycle, and the resource allocation accuracy is improved.

### BRIEF DESCRIPTION OF DRAWINGS

The drawings described herein are used to provide a further understanding of the present invention and form a part of the present application. The exemplary embodiments and descriptions thereof in the present invention are used to explain the present invention and not to limit the present invention in any improper way. Embodiments 3-4 and Exemplary embodiments 1-4 below are not covered by the current invention. In the drawings
FIG. 1 is a flowchart of a deployment of an NS by the ETSI in the related art.
FIG. 2 is a block diagram of a hardware structure of a computer terminal for a resource determination method.
FIG. 3 is a flowchart of a resource determination method according to an embodiment 1 of the present invention.
FIG. 4 is a block diagram one of a resource determination device according to an embodiment 2 of the present invention.
FIG. 5 is a block diagram two of a resource determination device according to an embodiment 2 of the present invention.
FIG. 6 is a block diagram of an entity structure of a resource determination device according to an embodiment 2 of the present invention.
FIG. 7 is a flowchart one of a resource allocation method according to an embodiment 3.
FIG. 8 is a flowchart two of a resource allocation method according to an embodiment 3
FIG. 9 is a flowchart of a resource grant according to an exemplary embodiment 1.
FIG. 10 is a flowchart of a resource grant according to an exemplary embodiment 2.
FIG. 11 is a flowchart of a resource grant according to an exemplary embodiment 3.
FIG. 12 is a flowchart of a resource grant according to an exemplary embodiment 4.

### DETAILED DESCRIPTION

The present invention will be described hereinafter in detail with reference to the drawings in conjunction with embodiments. It is to be illustrated that if not in collision, the embodiments and features therein in the present application may be combined with each other.

It is to be illustrated that the terms "first", "second" and the like in the description, claims and drawings of the present invention are used to distinguish between similar objects and are not necessarily used to describe a particular order or sequence. It should be understood that the data used in this way may be interchangeable where appropriate so that the embodiments of the present invention described herein may also be implemented in a sequence not illustrated or described herein. In addition, the terms "comprising/including", "having" or any other variations thereof described herein are intended to encompass a non-exclusive inclusion. For example, a process, method, system, product or device that includes a series of steps or units not only includes the expressly listed steps or units but may also include other steps or units that are not listed or are inherent to such process, method, product or device.

### Embodiment 1

According to an embodiment of the present invention, a resource determination method is provided. It is to be illustrated that the steps illustrated in flowcharts in the drawings may be performed by a computer system such as a group of computer executable instructions, and although logical sequences are illustrated in the flowcharts, the illustrated or described steps may be performed in sequences different from those described herein in some cases.

The method embodiment provided by the embodiment 1 of the present application may be executed on a mobile terminal, a computer terminal or other similar computing apparatuses. Taking the computer terminal executing as an example, FIG. 2 is a block diagram of a hardware structure of a computer terminal for a resource determination method according to an embodiment of the present invention. As shown in FIG. 2, the computer terminal 10 may include one or more (only one is shown in FIG. 2) processors 102 (in which the processor 102 may include, but is not limited to, a processing apparatus such as a microprocessor (MCU) or a programmable logic device (FPGA)), a memory 104 for storing data, and a transmission apparatus 106 for implementing communication functions. It should be understood by those skilled in the art that the structure shown in FIG. 2 is merely illustrative and not intended to limit the structure of the electronic apparatus described above. For example, the computer terminal 10 may further include more or fewer components than the components shown in FIG. 2, or has a configuration different from the configuration shown in FIG. 2.

The memory 104 may be configured to store software programs and modules of application software, such as program instructions/modules corresponding to the resource determination method in the embodiment of the present invention. The processor 102 executes the software programs and modules stored in the memory 104 so as to perform various function applications and data processing, that is, to implement a vulnerability detection method of application programs described above. The memory 104 may include a high-speed random access memory, or may further include a nonvolatile memory, such as one or more magnetic storage apparatuses, flash memories or other nonvolatile solid-state memories. In some examples, the memory 104 may further include memories that are remotely disposed with respect to the processor 102. These remote memories may be connected to the computer terminal 10 via a network. An example of the preceding network includes, but is not limited to, the Internet, an intranet, a local area network, a mobile communication network or a combination thereof.

The transmission apparatus 106 is configured to receive or transmit data via a network. A specific example of the preceding network may include a wireless network provided by a communication provider of the computer terminal 10. In one example, the transmission apparatus 106 includes a network interface controller (NIC), which may be connected to other network equipment via a base station and thus be capable of communicating with the Internet. In an example, the transmission apparatus 106 may be a radio frequency (RF) module, which is used for communicating with the Internet in a wireless way.

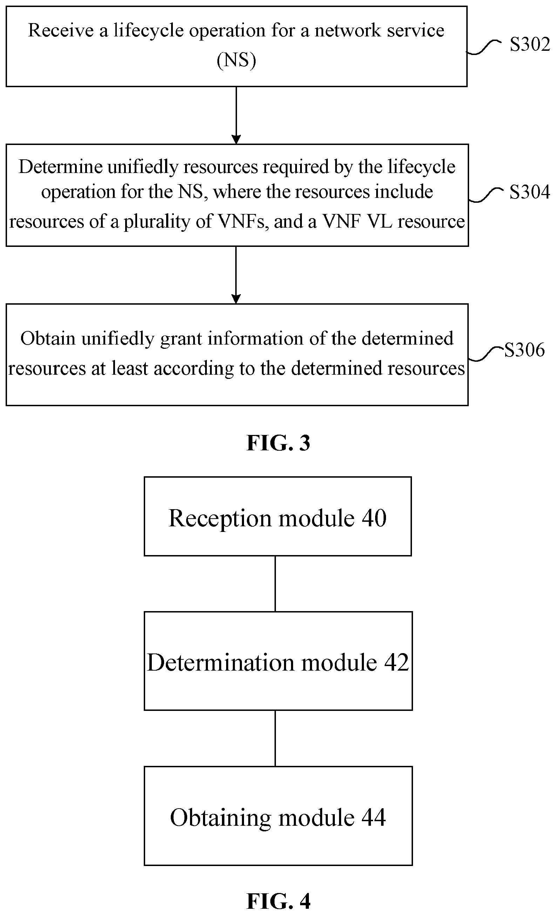

In the above operating environment, the present application provides a resource determination method shown in FIG. 3. FIG. 3 is a flowchart of a resource determination method according to an embodiment 1 of the present invention. As shown in FIG. 3, the method includes steps described below.

In step S302, a lifecycle operation for an NS is received.

In step S304, resources required by performing the lifecycle operation for the NS are determined unifiedly. The resources include resources of a plurality of virtualized network functions (VNFs), and a VNF virtual link (VL) resource.

In step S306, grant information of the determined resources is obtained unifiedly at least according to the determined resources.

In the above resource determination method, after the lifecycle operation for the NS is received, the resources (including resources of a plurality of VNFs and a VNF VL resource) required by performing the lifecycle operation for the NS are determined unifiedly, and the corresponding grant information is obtained unifiedly at least according to the determined resources, thereby solving the problem of having difficulty of ensuring an accuracy for allocating VNF resources and VNF VL resources due to performing a VNF resource grant and allocation process and a VNF VL resource grant and allocation process separately in the related art. The unified determination and grant are performed validly on the VNF resources and VNF VL resources required by performing the NS lifecycle, and the resource allocation accuracy is improved.

It is to be illustrated that the steps from S302 to S306 are executed by a network functions virtualization orchestrator (NFVO). The lifecycle operation of the embodiment includes any operation in the whole lifecycle from establishing to deleting of the NS, which may include establishing, deploying, migrating, maintaining, deleting, etc., of the NS, which is not limited in the embodiment.

The unified determination of the resources in the step S304 includes a determination of the VNF resources and a determination of the VNF VL resource. The determination of the VNF resources may be calculated in cooperation with a virtualized network functions manager (VNFM), or may be calculated through a virtualized network function descriptor (VNFD). The resource determination manner may be selected according to different operation situations in an actual operation.

In an optional example of the embodiment, after the step S306, the resource determination method may further include steps described below.

The determined resources are allocated according to the obtained grant information, and/or the grant information is sent to the VNFM. The VNFM is used for allocating the determined resources according to the obtained grant information. That is, after the grant information is determined, the determined resources may be allocated according to the grant information. Of course, other implementation manners may be used in the specific resource allocation process, which is not limited in the embodiment of the present invention.

It is to be illustrated that the above resource allocation process may be specifically implemented through following technical solutions.

The resource allocation process of the embodiment may be that, according to the determined grant information, the NFVO creates the VNF VL resource in cooperation with a virtualized infrastructure manager (VIM) or a wide area network infrastructure manager (WIM), and the NFVO cooperates with the VNFM so that the VNFM creates the VNF resources. Alternatively, the resource allocation process may also be that, according to the determined grant information, the NFVO creates the VNF VL resource in cooperation with the VIM or the WIM, and at the same time, the NFVO receives the grant information of the resource forwarded by the VNFM and creates the VNF resources (by this way, the grant information of the VNF resources is determined by the VNFM).

Before the step S302, the resource determination method may further include steps described below.

Resource data is collected from at least one of: a VIM and a WIM. It is to be illustrated that the actual collection source of collecting the resource data is not limited to the above VIM and WIM, and the collection source of the resource data may be flexibly adjusted according to the actual situation. A resource pool is established according to the collected resource data.

The above step S306 may be implemented in a following manner: obtaining unifiedly the grant information of the determined resources according to the determined resources and a preset condition.

The following embodiment in which the preset condition includes an operation of a user and does not include current resource information of the resource pool is not according to the invention and are present for illustration purposes only.

It is to be illustrated that the preset condition includes: current resource information of the resource pool, and/or an operation of a user. The operation of the user may be understood as a planning constraint of the user, i.e., a constraint instruction of the user on the resource allocation, which includes which VNFs are involved, connection relationship(s) between the VNFs, etc.

After the grant information of the required resources is determined, the determined resource data needs to be searched in a resource pool (which may be understood as the resource pool established according to the collected resource data in the above embodiment). If the current resource pool includes the required resource data, the corresponding resource data may be locked in the established resource pool, which is equivalent to reserving the required resource data. If the current resource pool has no required resource data or the resource data is not complete in the current resource pool, the system will remind the user to extend and update the data in the resource pool, and then the resources are determined and granted again. The resource reservation may prevent the reserved data from being re-granted to other operations.

In an optional example of the embodiment, after the determined resources are allocated according to the obtained grant information, the method further includes: updating data in the resource pool according to a resource allocation result. It is to be illustrated that the update herein includes at least following processes: according to success or failure of the resource allocation, resource data after the allocation succeeds are deleted from the resource pool, or resource data that have been locked but not successfully allocated are unlocked. The update may also include other predictable update operations, which is not limited in the embodiment. Herein, the data to be updated in the resource pool may include the data of the resource pool established according to the collected data, may also include the extended data of the resource pool, and may also include the data in the VIM and the WIM, which are not limited in the embodiment.

The step S304 may be implemented in various manners. In an optional example of the embodiment, the step S304 may be implemented through the following technical solution: determining resources required by a VNF object which performs the lifecycle operation. Before the resources required by the VNF object which performs the lifecycle operation are determined, the VNF object is determined according to at least a network service descriptor (NSD).

Since different VIM networks need to be connected through a WIM network, the VNF VL resource involved in the embodiment includes at least one of: a network connection resource between different VNFs within a WIM network, a network connection resource between different VNFs within a VIM network, and a network connection resource between a VNF within the WIM and a VNF within the VIM.

From the description of the embodiment described above, it will be apparent to those skilled in the art that the method in the embodiment described above may be implemented by software plus a necessary general-purpose hardware platform, or may of course be implemented by hardware. However, in many cases, the former is an alternative implementation mode. Based on such understanding, the solutions provided by the present invention substantially, or the part contributing to the existing art, may be embodied in the form of a software product. The computer software product is stored in a storage medium (such as a read-only memory (ROM)/random access memory (RAM), a magnetic disk or an optical disk) and includes several instructions for enabling a terminal device (which may be a mobile phone, a computer, a server, a network device, etc.) to execute the method according to each embodiment of the present invention.

### Embodiment 2

The embodiment also provides a resource determination device configured to implement the resource determination method and alternative examples thereof in the Embodiment 1. What has been described will not be repeated. As used below, the term "module" may be software, hardware or a combination thereof capable of implementing predetermined functions. The device in the embodiment described below is alternatively implemented by software, but implementation by hardware or by a combination of software and hardware is also possible and conceived.

FIG. 4 is a block diagram one of a resource determination device according to an embodiment 2 of the present invention. As shown in FIG. 4, the device includes a reception module 40, a determination module 42 and an obtaining module 44.

The reception module 40 is configured to receive a lifecycle operation for an NS.

The determination module 42 is configured to determine unifiedly resources required by performing the lifecycle operation for the NS. The resources include resources of a plurality of VNFs, and a VNF VL resource.

The obtaining module 44 is configured to obtain unifiedly grant information of the determined resources at least according to the determined resources.

Through the above resource determination deice, the reception module 40 receives the lifecycle operation for the NS, the determination module 42 determines unifiedly resources required by performing the lifecycle operation for the NS (in which the resources include resources of a plurality of VNFs, and a VNF VL resource), and the obtaining module 44 obtains unifiedly grant information of the determined resources according to at least the determined resources, thereby solving the problem of having difficulty of ensuring an accuracy for allocating VNF resources and VNF VL resources due to performing a VNF resource grant and allocation process and a VNF VL resource grant and allocation process separately in the related art. The unified determination and grant are performed validly on the VNF resources and VNF VL resources required by performing the NS lifecycle, and the resource allocation accuracy is improved.

The lifecycle operation of this embodiment includes any operation in the whole lifecycle from establishing to deleting of the NS, which may include establishing, deploying, migrating, maintaining, deleting, etc., of the NS, which is not limited in the embodiment.

The unified determination of the resources includes a determination of the VNF resources and a determination of the VNF VL resource. The determination of the VNF resources may be calculated in cooperation with a VNFM, or may be calculated through a VNFD. The resource determination manner may be selected according to different operation situations in an actual operation.

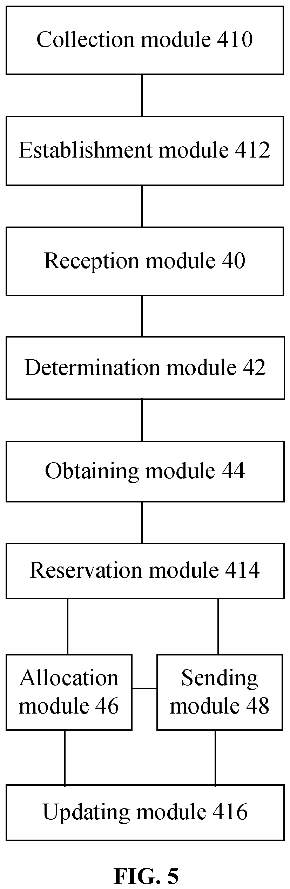

In an optional example of the embodiment, the device may further implement a resource allocation function. FIG. 5 is a block diagram two of a resource determination device according to an embodiment 2 of the present invention. As shown in FIG. 5, the above device further includes: an allocation module 46 and a sending module 48. The allocation module 46 is configured to allocate the determined resources according to the obtained grant information. The sending module 48 is configured to send the grant information to a VNFM, and the VNFM is configured to allocate the determined resources according to the obtained grant information. That is, after the grant information is determined, the determined resources may be allocated according to the grant information. Of course, other implementation manners may be used in the specific resource allocation process, which is not limited in the embodiment.

It is to be illustrated that the above resource allocation process may be specifically implemented through following technical solutions.

The resource allocation process of the embodiment may be that, according to the determined grant information, the NFVO creates the VNF VL resource in cooperation with a VIM or a WIM, and cooperates with the VNFM so that the VNFM create the VNF resources. Alternatively, the resource allocation process may also be that, according to the determined grant information, the NFVO creates the VNF VL resource in cooperation with the VIM or the WIM, and at the same time, the NFVO receives the grant information of the resources forwarded by the VNFM and creates the VNF resources (by this way, the grant information of the VNF resources is determined by the VNFM).

The device further includes: a collection module 410 and an establishment module 412. The collection module 410 is configured to collect resource data from at least one of: a VIM and a WIM. The establishment module 412 is configured to establish a resource pool according to the collected resource data. It is to be illustrated that the actual collection source of collecting the resource data is not limited to the above VIM and WIM, and the collection source of the resource data may be flexibly adjusted according to the actual situation.

The following embodiment in which the preset condition includes an operation of a user and does not include current resource information of the resource pool is not according to the invention and are present for illustration purposes only.

The obtaining module 44 is further configured to obtain unifiedly the grant information of the determined resources according to the determined resources and a preset condition. It is to be illustrated that the preset condition include: current resource information of the resource pool, and/or an operation of a user. The operation of the user may be understood as a planning constraint of the user, i.e., a constraint instruction of the user on the resource allocation, which includes which VNFs are involved, connection relationship(s) between the VNFs, etc.

Furthermore, the device further includes a reservation module 414, which is configured to reserve the determined resources in the established resource pool. After the grant information of the required resources is determined, the determined resource data needs to be searched in the resource pool. If the current resource pool includes the required resource data, the corresponding resource data may be locked in the established resource pool, which is equivalent to reserving the required resource data. If the current resource pool has no required resource data or the resource data is not complete in the current resource pool, the system will remind the user to expand and update the data of the resource pool, and then the resources are determined and granted again. The resource reservation may prevent the reserved data from being re-granted to other operations.

Furthermore, the device further includes an updating module 416, which is configured to update data in the resource pool according to a resource allocation result. It is to be illustrated that the update herein includes at least following processes: according to success or failure of the resource allocation, resource data after the allocation succeeds are deleted from the resource pool, or resource data that have been locked but not successfully allocated are unlocked. The update may also include other predictable update operations, which is not limited in the embodiment. Herein, the data to be updated in the resource pool may include the data of the resource pool established according to the collected data, may also include the extended data of the resource pool, and may also include the data in the VIM and the WIM, which are not limited in the embodiment.

In an optional example of the embodiment, determining the resources required by performing the lifecycle operation may be implemented through the following technical solution: determining resources required by a VNF object which performs the lifecycle operation. Before the resources required by the VNF object which performs the lifecycle operation are determined, the VNF object is determined according to at least an NSD.

Since different VIM networks need to be connected through a WIM network, the VNF VL resource involved in the embodiment includes at least one of: a network connection resource between different VNFs within a WIM network, a network connection resource between different VNFs within a VIM network, and a network connection resource between a VNF within the WIM and a VNF within the VIM.

For a better understanding of technical solutions of the above embodiments, an embodiment of the present invention further provides a resource determination device as an execution body of various functional modules in the above resource determination device. The device is used in the above embodiments and optional examples. What has been described will not be repeated.

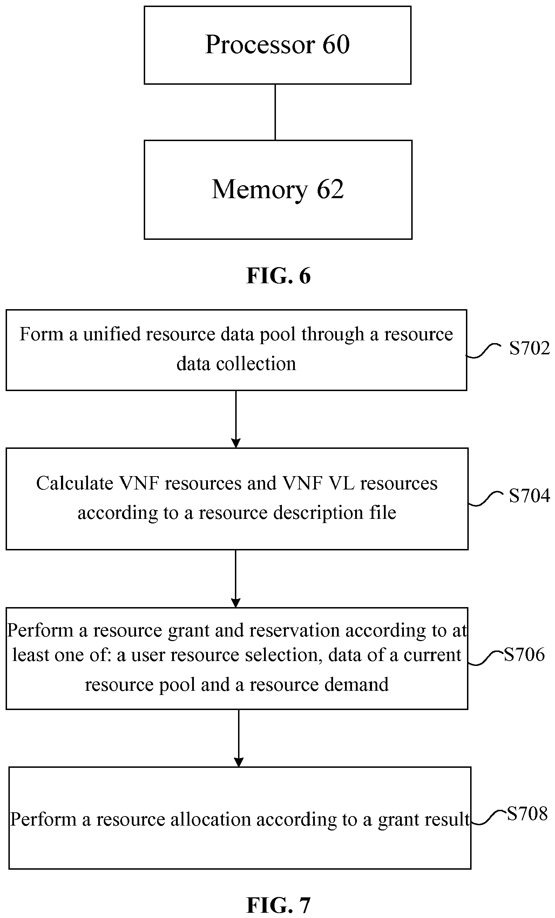

FIG. 6 is a block diagram of an entity structure of a resource determination device according to an embodiment 2 of the present invention. As shown in FIG. 6, the device includes a processor 60 and a memory 62.

The memory 62 is configured to store instructions executable by the processor 60. The processor 60 is configured to configured to execute, according to the instructions sored in the memory 62, following operations: receiving a lifecycle operation for an NS; determining unifiedly resources required by performing the lifecycle operation for the NS, where the resources include resources of a plurality of VNFs, and a VNF VL resource; obtaining unifiedly grant information of the determined resources at least according to the determined resources.

Through the above deice, the processor 60 receives the lifecycle operation for the NS, determines unifiedly resources required by performing the lifecycle operation for the NS (where the resources include resources of a plurality of VNFs, and a VNF VL resource), and obtains unifiedly grant information of the determined resources at least according to the determined resources, thereby solving the problem of having difficulty of ensuring an accuracy for allocating VNF resources and VNF VL resources due to performing a VNF resource grant and allocation process and a VNF VL resource grant and allocation process separately in the related art. The unified determination and grant are performed validly on the VNF resources and VNF VL resources required by performing the NS lifecycle, and the resource allocation accuracy is improved.

Alternatively, the processor 60 is further configured to execute following operations: allocating the determined resources according to the obtained grant information, and sending the grant information to a VNFM. Then, the VNFM is configured to allocate the determined resource according to the obtained grant information.

The processor is further configured to execute following operations: collecting resource data from at least one of: a VIM and a WIM, and establishing a resource pool according to the collected resource data.

Alternatively, the processor 60 is further configured to execute a following operation: reserving the determined resources in the established resource pool.

The embodiments of the present invention further provide an NFVO as a carrier of the resource determination device in the above embodiments, which is configured to execute the resource determination method in the above embodiments. What has been described will not be repeated.

### Embodiment 3

The embodiments of the present invention provide a complete process of resource allocation. FIG. 7 is a flowchart one of a resource allocation method according to an embodiment 3.

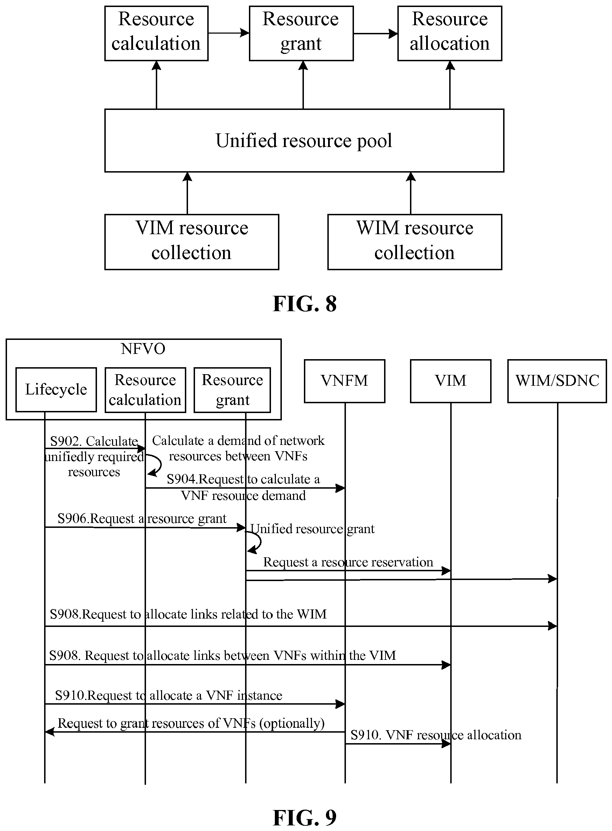

FIG. 8 is a flowchart two of a resource allocation method according to an embodiment.

As shown in FIGS. 7 and 8, the method includes steps described below.

In step S702, a unified resource data pool is formed through resource data collection. The collected data includes a VIM resource collection and a WIM resource collection.

In step S704, a VNF resource and a VNF VL resource are calculated according to a resource description file.

In step S706, the resources are granted and reserved according to at least one of: resource selection of a user, data of a current resource pool and a resource demand.

In step S708, the resources are allocated according to a grant result.

Through the method provided by the embodiment of the present invention, the accurate grant may be implemented under at least the following grant scenarios: 1. the resource grant where an affinity relationship exists between multiple VNFs; 2. the resource grant and the creation sequence of VLs between VNFs and each VNF; 3. the resource grant where one VNF crosses multiple VIMs; 4. the resource grant where a network functions virtualization (NFV) and a software define network (SDN) are converged.

For a better understanding of the technical solutions of the embodiments of the present invention, the resource determination method is described specifically according to different calculation manners in a process of VNF resource determination.

### Exemplary embodiment 1

For the resource determination method in the above embodiments, a unified resource pre-grant may be implemented through an original interface of the VNFM or an added independent resource pre-calculation interface of the VNFM.

It is to be illustrated that, when the NFVO and the VNFM belong to different manufacturers and the VNFD is not open to the NFVO, the VNFM provides an independent VNF resource calculation interface. Before the NFVO operates the VNFs, a resource situation of all the VNFs forming the NS is unifiedly obtained, and the resources are granted unifiedly.

First, a lifecycle management module of the NFVO (which is equivalent to the reception module and the determination module in the Embodiment 2) receives an instruction for operate a network service. The instruction for operating the network service may be an instruction of a user, may be an instruction from another system, or may be an operation for triggering the lifecycle by the NS itself (such as an NS has a failure, and then it performs a self-healing process such as rebooting, migrating, or the like).

The lifecycle management module of the NFVO resolves and determines a set of VNFM objects that need to be operated, a set of VNF objects managed by each VNFM, and location constraint information planned by the user according to the NSD and user planning information. It is to be illustrated that the NSD may be designed by a designer within the NFVO, or may be designed by an external independent designer, and the NSD is equivalent to a logic specification and does not change with instructions. The user planning information is from a user instruction and includes a variety of information such as location information of VNFs and connection relationship information of VNFs.

FIG. 9 is a flowchart of a resource grant according to the exemplary embodiment 1.

As shown in FIG. 9, the grant process includes steps described below.

In step S902, a lifecycle module of the NFVO obtains resource information of a network connection between VNFs from a resource calculation module (which is equivalent to the determination module in the Embodiment 2). The NSD includes a network managed by the WIM and network connections between VNFs within the VIM. Since two VIMs are connected through the WIM, a relationship of VLs includes: VNF VLs within the same WIM network, VNF VLs within the same VIM network, and VNF VLs between different VIMs.

In step S904, the lifecycle management module of the NFVO requests a resource calculation module of the VNFM (which is equivalent to the determination module in the Embodiment 2) to obtain resources required by the current operated VNF. The VNFM may be one or more, and this step is equivalent to determining VNF resource information according to a determined VNF object. In step S906, the lifecycle management module of the NFVO aggregates the resource information of the network connections between VNFs, a VNF resource information set, the user planning information and other information which are obtained, and requests a unified resource grant module (which is equivalent to the obtaining module and the reservation module in the Embodiment 2), so as to obtain the resource grant and reservation.

In step S908, the NFVO performs specific network connection resource allocation between VNFs under the grant and reservation information. The specific connection resource allocation is coordinated with the VIM or the WIM according to an NS resource description scenario.

In step S910, the lifecycle management module of the NFVO initiates instantiation on the VNF to the VNFM. In the instantiation process, the obtained resource grant and reservation information is sent to a lower-level resource manager. The VNFM performs the specific resource allocation under the grant and reservation information. The specific resource allocation may be performed in the VNFM, or may be forwarded by the VNFM to the NFVO and performed by the NFVO.

### Exemplary embodiment 2

The embodiment may be understood as unified resource calculation and grant based on a unified VNFD model, and the specific process is as follows.

The VNFD is expressed unifiedly at a management and orchestration (MANO) level. Before NFVO resource instantiation, resource conditions of all the VNFs forming the NS, resource conditions of VL connections among the VNFs and user planning information are calculated unifiedly, and the resource grant is performed unifiedly.

First, the lifecycle management module of the NFVO receives an instruction to operate a network service.

The lifecycle management module of the NFVO resolves and determines a set of VNFM objects that need to be operated, a set of VNF objects managed by each VNFM, and location constraints of a user on the VNFs in the user planning information according to the NSD and the user planning information.

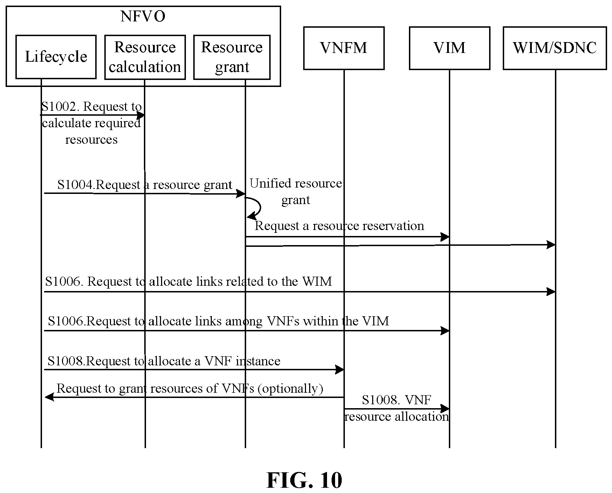

FIG. 10 is a flowchart of a resource grant according to the exemplary embodiment 2.

As shown in FIG. 10, the grant process includes steps S described below.

In step S1002, the lifecycle management module of the NFVO requests the resource calculation module (which is equivalent to the calculation module of the NFVO in the above embodiments) to obtain resources required by a management object in the current operation. The resources include resource information of network connections between VNFs and resource information of each VNF.

In step S1004, the lifecycle management module of the NFVO aggregates the resource information of the network connections between VNFs, the VNF resource information set, the planning information by a user on the resources, and other information which are obtained, and requests the unified resource grant module so as to obtain the resource grant and reservation.

In step S1006, the NFVO performs specific network connection resource allocation between VNFs under the grant and reservation information.

In step S1008, the lifecycle management module of the NFVO initiates instantiation on the VNF to the VNFM. In the instantiation process, the obtained resource grant and reservation information is sent to the VNFM. The VNFM performs specific resource allocation under the grant and reservation information. The specific resource allocation may be performed by the VNFM, or may be forwarded by the VNFM to the NFVO and performed by the NFVO.

### Exemplary embodiment 3

By blocking single VNF grant, a flow of a network connection allocation between VNFs is adjusted, and the unified resource pre-grant is implemented. That may be understood that the NFVO prevents the single VNF grant, collects resource grant information of all the VNFs during a current NS operation, and then performs the unified resource grant.

First, the lifecycle management module of the NFVO receives an instruction to operate a network service.

The lifecycle management module of the NFVO resolves and determines a set of VNFM objects that need to be operated, a set of VNF objects managed by each VNFM, and location constraint information by the user planning according to the NSD and user planning information.

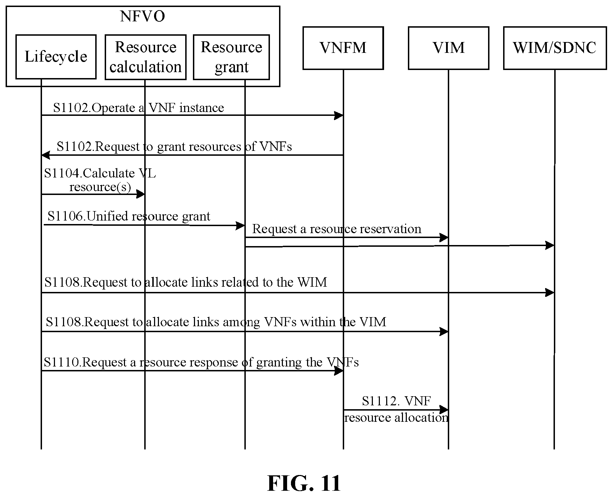

FIG. 11 is a flowchart of a resource grant according to the exemplary embodiment 3.

As shown in FIG. 11, the grant process includes steps described below.

In step S1102, the lifecycle management module of the NFVO initiates an operation on the VNFs to the VNFM. The VNFM may be one or more, and the VNFM initiates a resource grant request to the NFVO.

In step S1104, the lifecycle module of the NFVO obtains the resource information of the network connections between VNFs from a resource calculation module.

In step S1106, the lifecycle management module of the NFVO aggregates the resource information of the network connections between VNFs, a set of resource information of all the VNF and the user planning information which are obtained, and requests the unified resource grant module to obtain resource grant and reservation.

In step S1108, the NFVO performs a specific network connection resource allocation between VNFs under the grant and reservation information.

In step 51110, the lifecycle management module of the NFVO returns to the VNFM a resource grant result which carries external connection information of the VNFs.

In step 1112, The VNFM performs a specific resource allocation under the grant and reservation information. The specific resource allocation may be performed by the VNFM, or may be forwarded by the VNFM to the NFVO and performed by the NFVO.

### Exemplary embodiment 4

The NFVO has a built-in universal VNFM function, and the unified resource grant is implemented within the NFVO system.

First, the NFVO receives an instruction to operate a network service in a lifecycle operation of the NS.

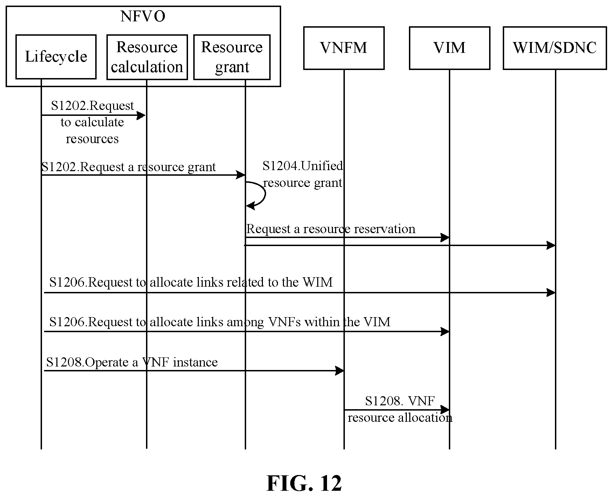

FIG. 12 is a flowchart of a resource grant according to the exemplary embodiment 4.

As shown in FIG. 12, the grant process includes steps described below.

In step S1202, the NFVO calculates resource information of the current operation. The resource information includes VL resources among VNFs and resources of all VNFs in the current operation. In step S1204, the unified resource grant module of the NFVO performs a grant according to a calculation result, a planning constraint of the user and current resource pool information, and simultaneously performs a reservation on a resource pool of the NFVO and a resource pool of the VIM.

In step S1206, the NFVO creates VLs among VNFs according to the resource grant information, i.e., performs resource allocation on the VNF VLs.

In step S1208, the lifecycle management module of the NFVO initiates an instantiation on the VNFs to the VNFM. In the instantiation process, the obtained resource grant and reservation information is sent to the VNFM. The NFVO cooperates with the built-in VNFM to create a VNFs according to the resource grant information, that is, to perform the resource allocation of the VNFs.

### Embodiment 4

The embodiments further provide a storage medium. Optionally, in the embodiment, the storage medium may be configured to store program codes for executing the resource determination method provided in the Embodiment 1.

Optionally, in the embodiment, the storage medium may be located in any one computer terminal in a computer terminal group in a computer network, or may be located in any one mobile terminal in a mobile terminal group.

Optionally, in the embodiment, the storage medium is configured to store program codes for executing steps described below.

In S 1, a lifecycle operation for an NS is received.

In S2, resources required by performing the lifecycle operation for the NS are determined unifiedly, where the resources include resources of a plurality of VNFs, and a VNF VL resource.

In S3, grant information of the determined resources is obtained unifiedly at least according to the determined resources.

Optionally, the storage medium is further configured to store program codes for executing step(s) described below.

In S 1, the determined resources are allocated according to the obtained grant information; and/or, in S2, the grant information is sent to a VNFM, where the VNFM is configured to allocate the determined resources according to the obtained grant information.

Optionally, the storage medium is further configured to store program codes for executing steps described below.

In S 1, resource data are collected from at least one of: a VIM and a WIM.

In S2, a resource pool is established according to the collected resource data.

Optionally, the storage medium is further configured to store program codes for executing a step described below.

In S 1, the grant information of the determined resources is obtained unifiedly according to the determined resources and a preset condition. The preset condition includes current resource information of a resource pool.

Optionally, the storage medium is further configured to store program codes for executing a step described below.

In S 1, the determined resources are reserved in the established resource pool.

Optionally, the storage medium is further configured to store program codes for executing a step described below.

In S 1, data in the resource pool are updated according to a resource allocation result.

Optionally, the storage medium is further configured to store program codes for executing a step described below.

In S 1, resources required by a VNF object which performs the lifecycle operation are determined.

Optionally, the storage medium is further configured to store program codes for executing a step described below.

In S 1, the VNF object is determined according to at least an NSD.

The serial numbers of the embodiments described above in the present invention are merely for ease of description and do not indicate superiority and inferiority of the embodiments.

In the embodiments described above in the present invention, the description of each embodiment has its own emphasis. For a part not described in detail in one embodiment, reference may be made to a related description of other embodiments.

It should be understood that the technical content disclosed in the embodiments of the present application may be implemented in other ways. The apparatus embodiments described above are merely illustrative. For example, a unit division is merely a logical function division, and, in practice, the unit division may be implemented in other ways. For example, multiple units or components may be combined or may be integrated into another system, or some features may be ignored or not executed. Additionally, the presented or discussed mutual coupling, direct coupling or communication connections may be indirect coupling or communication connections via interfaces, units or modules, or may be electrical or in other forms.

The units described above as separate components may or may not be physically separated. Components presented as units may or may not be physical units, i.e., may be located in one place or may be distributed on multiple network units. Part or all of these units may be selected according to practical requirements to achieve the objects of the solutions in the embodiments of the present invention.

Additionally, various functional units in each embodiment of the present invention may be integrated into one processing unit, or each unit may be physically presented separately, or two or more units may be integrated into one unit. The integrated unit may be implemented by hardware or a software functional unit.

The integrated unit may be stored in a computer-readable storage medium if implemented in the form of the software functional unit and sold or used as an independent product. Based on this understanding, the solutions provided by the present invention substantially, or the part contributing to the existing art, may be embodied in the form of a software product. The computer software product is stored on a storage medium and includes several instructions for enabling a computer device (which may be a personal computer, a server, a network device or the like) to execute all or part of the steps in the methods provided by the embodiments of the present invention. The preceding storage medium includes: a USB flash drive, a ROM, a RAM, a mobile hard disk, a magnetic disk, an optical disk or another medium capable of storing program codes.

## Claims

1. A resource determination method comprising:
collecting, by a network functions virtualization orchestrator, NFVO, resource data from at least one of: a virtualized infrastructure manager, VIM, and a wide area network infrastructure manager, WIM;
establishing, by the NFVO, a resource pool according to the collected resource data; receiving (S302), by the NFVO, a lifecycle operation for a network service, NS; determining (S304) unifiedly, by the NFVO, resources required by performing the lifecycle operation for the NS, wherein the resources comprise: resources of a plurality of virtualized network functions, VNFs, and a VNF virtual link, VL, resource; and
determining unifiedly and directly, by the NFVO, grant information of the determined resources according to the determined resources and current resource information of the resource pool.

2. The method of claim 1, wherein after determining unifiedly and directly, by the NFVO, the grant information of the determined resources according to the determined resources and the current resource information of the resource pool, the method further comprises:
allocating, by the NFVO, the determined resources according to the determined grant information; and/or
sending, by the NFVO, the grant information to a virtualized network functions manager, VNFM, wherein the VNFM is configured to allocate the determined resources according to the determined grant information.

3. The method of claim 1, wherein after determining unifiedly and directly, by the NFVO, the grant information of the determined resources according to the determined resources and current resource information of the resource pool, the method further comprises:
reserving, by the NFVO, the determined resources in the established resource pool.

4. The method of claim 2, wherein after allocating, by the NFVO, the determined resources according to the determined grant information, the method further comprises:
updating, by the NFVO, data in the resource pool according to a resource allocation result.

5. The method of claim 1, wherein determining (S304) unifiedly, by the NFVO, the resources required by performing the lifecycle operation for the NS comprises: determining, by the NFVO, resources required by a VNF object which performs the lifecycle operation;
wherein before determining, by the NFVO, the resources required by the VNF object which performs the lifecycle operation, the method further comprises: determining, by the NFVO, the VNF object at least according to a network service descriptor, NSD.

6. The method of any one of claims 1 to 5, wherein the VNF VL resource comprises at least one of:
a network connection resource between different VNFs within a WIM network, a network connection resource between different VNFs within a VIM network, and a network connection resource between a VNF within the WIM and a VNF within the VIM.

7. A resource determination device, wherein
the device is a network functions virtualization orchestrator, NFVO and the device comprises a processor and a memory, wherein the memory stores instructions executable by the processor, and the device comprises:
a collection module (410), which is configured to collect resource data from at least one of: a virtualized infrastructure manager, VIM, and a wide area network infrastructure manager, WIM; an establishment module (412), which is configured to establish a resource pool according to the collected resource data;
a reception module (40), which is configured to receive a lifecycle operation for a network service, NS;
a determination module (42), which is configured to determine unifiedly resources required by performing the lifecycle operation for the NS, wherein the resources comprise: resources of a plurality of virtualized network functions, VNFs, and a VNF virtual link, VL, resource; and
an obtaining module (44), which is configured to determine unifiedly and directly grant information of the determined resources according to the determined resources and current resource information of the resource pool.

8. The device of claim 7, further comprising:
an allocation module (46), which is configured to allocate the determined resources according to the determined grant information; and
a sending module (48), which is configured to send the grant information to a virtualized network functions manager, VNFM, wherein the VNFM is configured to allocate the determined resources according to the determined grant information.

9. The device of claim 7, further comprising:
a reservation module (414), which is configured to reserve the determined resources in the established resource pool.

10. The device of claim 8, further comprising:
an updating module (416), which is configured to update data in the resource pool according to a resource allocation result.

## Patentansprüche

1. Ressourcenbestimmungsverfahren, umfassend:
Sammeln von Ressourcendaten von zumindest einem von einem virtualisierten Infrastrukturmanager, VIM, und einem Weitbereichsnetzinfrastrukturmanager, WIM, durch einen Netzwerkfunktionen-Virtualisierungsorchestrator (Network Functions Virtualization Orchestrator, NFVO);
Einrichten eines Ressourcenpools durch den NFVO gemäß den gesammelten Ressourcendaten;
Empfangen (S302) einer Lebenszyklusfunktion für einen Netzwerkdienst, NS, durch den NFVO;
einheitliches Bestimmen (S304) von Ressourcen, die zum Durchführen der Lebenszyklusfunktion für den NS benötigt werden, durch den NFVO, wobei die Ressourcen Folgendes umfassen:
Ressourcen einer Vielzahl von virtualisierten Netzwerkfunktionen, VNF, und eine VNF-VL-Ressource (Virtual Link - VL); und
einheitliches und direktes Bestimmen von Gewährungsinformationen der bestimmten Ressourcen gemäß den bestimmten Ressourcen und aktuellen Ressourceninformationen des Ressourcenpools durch den NFVO.

2. Verfahren nach Anspruch 1, wobei das Verfahren nach dem einheitlichen und direkten Bestimmen der Gewährungsinformationen der bestimmten Ressourcen gemäß den bestimmten Ressourcen und den aktuellen Ressourceninformationen des Ressourcenpools durch den NFVO ferner Folgendes umfasst:
Zuteilen der bestimmten Ressourcen durch den NFVO gemäß den bestimmten Gewährungsinformationen; und/oder
Senden der Gewährungsinformationen an einen virtualisierten Netzwerkfunktionsmanager, VNFM, durch den NFVO, wobei der VNFM konfiguriert ist, um die bestimmten Ressourcen gemäß den bestimmten Gewährungsinformationen zuzuteilen.

3. Verfahren nach Anspruch 1, wobei das Verfahren nach dem einheitlichen und direkten Bestimmen der Gewährungsinformationen der bestimmten Ressourcen gemäß den bestimmten Ressourcen und aktuellen Ressourceninformationen des Ressourcenpools durch den NFVO ferner Folgendes umfasst:
Reservieren der bestimmten Ressourcen durch den NFVO in dem eingerichteten Ressourcenpool.

4. Verfahren nach Anspruch 2, wobei das Verfahren nach dem Zuteilen der bestimmten Ressourcen durch den NFVO gemäß den bestimmten Gewährungsinformationen ferner Folgendes umfasst:
Aktualisieren von Daten im Ressourcenpool gemäß einem Ressourcenzuteilungsergebnis durch den NFVO.

5. Verfahren nach Anspruch 1, wobei das einheitliche Bestimmen (S304) der Ressourcen, die zum Durchführen der Lebenszyklusfunktion für den NS benötigt werden, durch den NFVO Folgendes umfasst: Bestimmen der Ressourcen, die von einem VNF-Objekt benötigt werden, das die Lebenszyklusfunktion durchführt, durch den NFVO;
wobei das Verfahren vor dem Bestimmen der von dem VNF-Objekt, das die Lebenszyklusfunktion durchführt, benötigten Ressourcen durch den NFVO Folgendes umfasst: Bestimmen des VNF-Objekts zumindest gemäß einem Netzwerkdienstdeskriptor, NSD, durch den NFVO.

6. Verfahren nach einem der Ansprüche 1 bis 5, wobei die VNF-VL-Ressource zumindest eines von Folgendem umfasst:
eine Netzwerkverbindungsressource zwischen verschiedenen VNF innerhalb eines WIM-Netzwerks, eine Netzwerkverbindungsressource zwischen verschiedenen VNF innerhalb eines VIM-Netzwerks und eine Netzwerkverbindungsressource zwischen einer VNF innerhalb des WIM und einer VNF innerhalb des VIM.

7. Ressourcenbestimmungsvorrichtung, wobei die Vorrichtung ein Netzwerkfunktions-Virtualisierungsorchestrator, NFVO ist und die Vorrichtung einen Prozessor und einen Speicher umfasst, wobei in dem Speicher Anweisungen gespeichert sind, die durch den Prozessor ausführbar sind, und die Vorrichtung Folgendes umfasst:
ein Sammelmodul (410), das konfiguriert ist, um Ressourcendaten von mindestens einem von einem virtualisierten Infrastrukturmanager, VIM, und einem Weitbereichsnetzinfrastrukturmanager, WIN, zu sammeln;
ein Einrichtungsmodul (412), das konfiguriert ist, um einen Ressourcenpool gemäß den gesammelten Ressourcendaten einzurichten;
ein Empfangsmodul (40), das konfiguriert ist, um eine Lebenszyklusfunktion für einen Netzwerkdienst, NS, zu empfangen;
ein Bestimmungsmodul (42), das konfiguriert ist, um in einheitlicher Weise Ressourcen zu bestimmen, die für das Durchführen der Lebenszyklusfunktion für den NS benötigt werden, wobei die Ressourcen umfassen: Ressourcen einer Vielzahl von virtualisierten Netzwerkfunktionen, VNF, und eine virtuelle VNF-Link-Ressource (Virtual Link -VL); und
ein Erhaltungsmodul (44), das konfiguriert ist, um Gewährleistungsinformationen der bestimmten Ressourcen gemäß den bestimmten Ressourcen und aktuellen Ressourceninformationen des Ressourcenpools in einheitlicher und direkter Weise zu bestimmen.

8. Vorrichtung nach Anspruch 7, die ferner Folgendes umfasst:
ein Zuteilungsmodul (46), das konfiguriert ist, um die bestimmten Ressourcen gemäß den bestimmten Gewährungsinformationen zuzuteilen; und
ein Sendemodul (48), das konfiguriert ist, um die Gewährungsinformationen an einen virtualisierten Netzwerkfunktionsmanager, VNFM, zu senden, wobei der VNFM konfiguriert ist, um die bestimmten Ressourcen gemäß den bestimmten Gewährungsinformationen zuzuteilen.

9. Vorrichtung nach Anspruch 7, die ferner Folgendes umfasst:
ein Reservierungsmodul (414), das konfiguriert ist, um die bestimmten Ressourcen in dem eingerichteten Ressourcenpool zu reservieren.

10. Vorrichtung nach Anspruch 8, die ferner Folgendes umfasst:
ein Aktualisierungsmodul (416), das konfiguriert ist, um Daten in dem Ressourcenpool gemäß einem Ressourcenzuteilungsergebnis zu aktualisieren.

## Revendications

1. Procédé de détermination de ressource comprenant :
la collecte, par un orchestrateur de virtualisation de fonctions réseau, NFVO, de données de ressources à partir d'au moins un élément parmi : un gestionnaire d'infrastructure virtualisée, VIM, et un gestionnaire d'infrastructure de réseau étendu, WIM ;
l'établissement, par le NFVO, d'une réserve de ressources en fonction des données de ressources collectées ;
la réception (S302), par le NFVO, d'une opération de cycle de vie pour un service réseau, NS ;
la détermination (S304) de manière unifiée, par le NFVO, de ressources requises par l'exécution de l'opération de cycle de vie pour le NS, dans lequel les ressources comprennent : des ressources d'une pluralité de fonctions de réseau virtualisées, VNF, et une ressource de liaison virtuelle, VL, VNF ; et
la détermination de manière unifiée et directe, par le NFVO, d'informations d'autorisation des ressources déterminées en fonction des ressources déterminées et des informations de ressource courantes de la réserve de ressources.

2. Procédé selon la revendication 1, dans lequel après détermination de manière unifiée et directe, par le NFVO, des informations d'autorisation des ressources déterminées en fonction des ressources déterminées et des informations de ressources courantes de la réserve de ressources, le procédé comprend en outre :
l'allocation, par le NFVO, des ressources déterminées en fonction des informations d'autorisation déterminées ; et/ou l'envoi, par le NFVO, des informations d'autorisation à un gestionnaire de fonctions de réseau virtualisé, VNFM, dans lequel le VNFM est configuré pour allouer les ressources déterminées en fonction des informations d'autorisation déterminées.

3. Procédé selon la revendication 1, dans lequel après détermination de manière unifiée et directe, par le NFVO, des informations d'autorisation des ressources déterminées en fonction des ressources déterminées et des informations de ressources courantes de la réserve de ressources, le procédé comprend en outre :
la réservation, par le NFVO, des ressources déterminées dans la réserve de ressources établie.

4. Procédé selon la revendication 2, dans lequel après allocation, par le NFVO, des ressources déterminées en fonction des informations d'autorisation déterminées, le procédé comprend en outre :
la mise à jour, par le NFVO, de données dans la réserve de ressources en fonction d'un résultat d'allocation de ressources.

5. Procédé selon la revendication 1, dans lequel la détermination (S304) de manière unifiée, par le NFVO, des ressources requises par l'exécution de l'opération de cycle de vie pour le NS comprend : la détermination, par le NFVO, de ressources requises par un objet VNF qui effectue l'opération de cycle de vie ;
dans lequel avant la détermination, par le NFVO, des ressources requises par l'objet VNF qui effectue l'opération de cycle de vie, le procédé comprend en outre : la détermination, par le NFVO, de l'objet VNF au moins en fonction d'un descripteur de service de réseau, NSD.

6. Procédé selon l'une quelconque des revendications 1 à 5, dans lequel la ressource VL VNF comprend au moins un élément parmi : une ressource de connexion réseau entre différentes VNF dans un réseau WIM, une ressource de connexion réseau entre différentes VNF dans un réseau VIM, et une ressource de connexion réseau entre une VNF dans le WIM et une VNF dans le VIM.

7. Dispositif de détermination de ressource, dans lequel le dispositif est un orchestrateur de virtualisation de fonctions réseau, NFVO et le dispositif comprend un processeur et une mémoire, dans lequel la mémoire stocke des instructions exécutables par le processeur, et le dispositif comprend :
un module de collecte (410), qui est configuré pour collecter des données de ressources provenant d'au moins un élément parmi : un gestionnaire d'infrastructure virtualisée, VIM, et un gestionnaire d'infrastructure de réseau étendu, WIM ;
un module d'établissement (412), qui est configuré pour établir une réserve de ressources en fonction des données de ressources collectées ;
un module de réception (40), qui est configuré pour recevoir une opération de cycle de vie pour un service de réseau, NS ;
un module de détermination (42), qui est configuré pour déterminer de manière unifiée des ressources requises par l'exécution de l'opération de cycle de vie pour le NS, dans lequel les ressources comprennent : des ressources d'une pluralité de fonctions de réseau virtualisées, VNF, et une ressource de liaison virtuelle, VL, VNF ; et
un module d'obtention (44), qui est configuré pour déterminer de manière unifiée et directe des informations d'autorisation des ressources déterminées en fonction des ressources déterminées et des informations de ressources courantes de la réserve de ressources.

8. Dispositif selon la revendication 7, comprenant en outre :
un module d'allocation (46), qui est configuré pour allouer les ressources déterminées en fonction des informations d'autorisation déterminées ; et
un module d'envoi (48), qui est configuré pour envoyer les informations d'autorisation à un gestionnaire de fonctions de réseau virtualisé, VNFM, dans lequel le VNFM est configuré pour allouer les ressources déterminées en fonction des informations d'autorisation déterminées.

9. Dispositif selon la revendication 7, comprenant en outre :
un module de réservation (414), qui est configuré pour réserver les ressources déterminées dans la réserve de ressources établie.

10. Dispositif selon la revendication 8, comprenant en outre : un module de mise à jour (416), qui est configuré pour mettre à jour des données dans la réserve de ressources en fonction d'un résultat d'allocation de ressources.
